# EUROPEAN PATENT APPLICATION

(11) **EP 3 900 586 A1**
(43) Date of publication of application: **27.10.2021**
(21) Application number: 20170337.8
(22) Date of filing: 20.04.2020
(51) Int. Cl.: A47J 42/08

(54) **ADJUSTABLE GRINDING DEVICE FOR A SPICE GRINDER**

(71) Applicant: Cheng, Mi-Ci, Tainan City 709 (TW)
(72) Inventor: Cheng, Mi-Ci, Tainan City 709 (TW)
(74) Representative: Jannig & Repkow Patentanwälte PartG mbB

(57) **Abstract**

A spice grinder includes a main part having slots defined axially through the wall thereof. An adjustment seat is mounted to the main part and includes guide members. An adjustment member includes protrusions formed on the outside thereof. The protrusions are located corresponding to the slots. Each protrusion has a ridge which is slidably engaged with the guide member corresponding thereto. A grinding unit is located in the adjustment member and has a grinding face. A case has a grinding part located therein which is located corresponding to the grinding face of the grinding unit with a gap formed between the grinding part and the grinding face. When the adjustment seat is rotated, the adjustment member is moved axially by movement of the ridges relative to the guide members to adjust the gap to obtain the ground spices of desired sizes.

## Description

### BACKGROUND OF THE INVENTION

### 1. Fields of the invention

The present invention relates to a spice grinder, and more particularly, to an adjustable grinding device for a spice grinder for obtaining the ground spice with consistent sizes.

### 2. Descriptions of Related Art

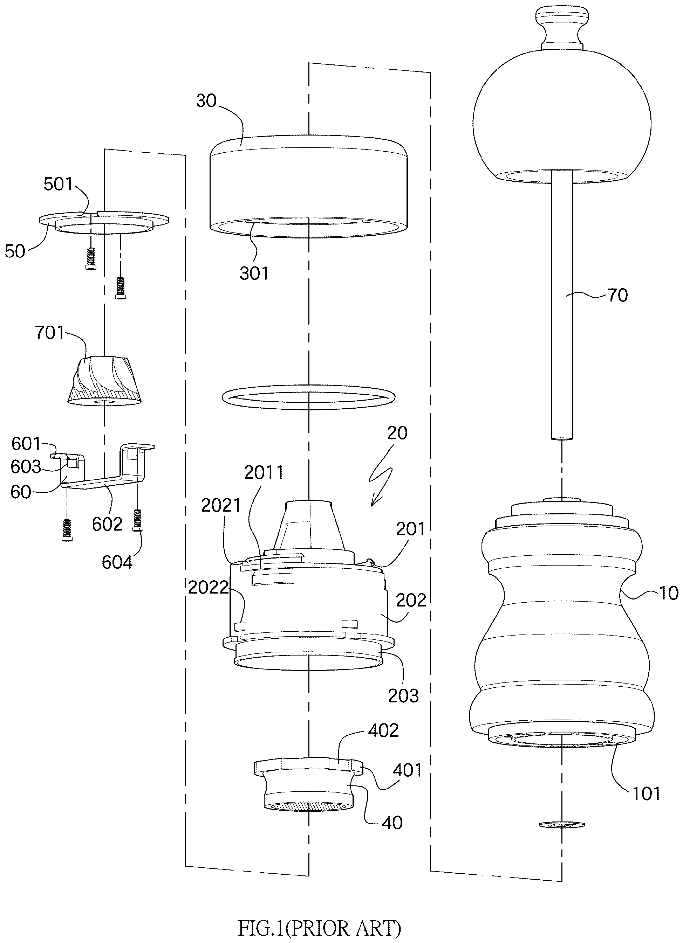

The conventional spice grinder is disclosed in Fig. 1, and comprises a main part 10 having a connection portion 101 formed to a lower end thereof. An adjustment part 20 has a connection member 201, a top adjustment member 202 and a bottom adjustment member 203. The connection member 201 has one end thereof connected to the connection portion 101 of the main part 10, and the other end of the connection member 201 connected to the bottom adjustment member 203. The top and bottom adjustment members 202, 203 are threadedly connected to each other. When the top adjustment member 202 is rotated relative to the connection member 201, the threaded connection between the top and bottom adjustment members 202, 203 can be adjusted, so as to adjust the length of the adjustment part 20. In order to prevent the bottom adjustment member 203 from being separated from the top adjustment member 202, the connection member 201 has a slide 2011 and the top adjustment member 202 has a slot 2021 in which the slide 2011 is slidably and received. The slot 2021 also restricts the movement of the slide 2011. The bottom adjustment member 203 has threaded holes. A rotary member 30 is mounted to the top adjustment member 202 and has multiple grooves 301. The top adjustment member 202 has multiple protrusions 2022 on outside thereof, and the protrusions 2022 are slidably engaged with the grooves 301 of the rotary member 30. The top adjustment member 202 is rotated by rotating the rotary member 30. A grinding unit 40 is connected to the bottom of the bottom adjustment member 203 and includes a flange 401 extending radially therefrom. The flange 401 has at least one securing portion which is located corresponding to the threaded holes. A positioning ring 50 is mounted to the grinding member 40 and contacts the flange 401. The positioning ring 50 has two locking holes 501 which are also located corresponding the threaded holes. A positioning part 60 includes two positioning portions 601 and a bridge portion 602, wherein the bridge portion 602 is fit into the grinding unit 40. The positioning part 60 has two through holes 603 located corresponding to the locking holes 501. Two bolts 604 each extend through the through hole 603 and is threadedly connected to the locking hole 501, and are connected to the threaded holes. A shaft 70 rotatably extends through the main part 10, a grinding member 701 is connected to the distal end of the shaft 70. The grinding member 701 is located in the grinding unit 40, and a gap is formed between the grinding member 701 and the grinding unit 40.

When rotating the rotary member 30, the top adjustment member 202 is rotated relative to the connection member 201 and the bottom adjustment member 203, the bottom adjustment member 203 together with the grinding unit 40, the positioning ring 50 and the positioning part 60 are moved upward or downward. Therefore, the gap between the grinding part 40 and the grinding member 701 is adjusted to control the size of the ground spice.

However, the conventional spice grinder is complicated and includes too many parts, the cost of manufacturing of the parts is increased, and it takes a lot of time labor cost to assemble. Taken the adjustment part 20 as an example, the connection member 201, the top and bottom adjustment members 202, 203 each have a complicated shape or mechanism which increase the assembling cost. Besides, the adjustment part 20 is difficult to be removed or replaced once it is installed. Therefore, the cost for maintenance and replacement is high, the whole grinder may have to be replaced.

After a period of time of use, because the top and bottom adjustment members 202, 203 are connected to each other by way of threading, when the gap between the grinding part 40 and the grinding member 701 is adjusted to be large, the top and bottom adjustment members 202, 203 are threadedly connected by few threads, so that the bottom adjustment member 203 tends to shake to affect the use of the grinder. The shake of the bottom adjustment member 203 may damage the threads between the top and bottom adjustment members 202, 203. The rotary member 30 can easily be rotated by impact after the gap is adjusted, and the unexpected rotation of the rotary member 30 causes the change of the adjustment of the gap. Furthermore, there is friction between the particles of the spices, the grinding unit 40 and the grinding member 701, the grinding member 701 may rotate the bottom adjustment member 203 by the rotation of the grinding unit 40. Therefore, the gap between the grinding unit 40 and the grinding member 701 is then changed to affect the result of the grinding.

The present invention intends to provide a spice grinder to eliminate the shortcomings mentioned above.

### SUMMARY OF THE INVENTION

The present invention relates to a spice grinder and comprises a main part having a through hole defined axially therethrough. At least one slot is defined axially through the wall of the lower portion of the main part. The at least one slot communicates with the through hole. An adjustment seat is mounted to outside of the main part, and has at least one guide member defined in the inner periphery thereof. An adjustment member has at least one brick formed on the outside thereof. The at least one brick is located corresponding to the at least one slot. The at least one brick has at least one ridge which is slidably engaged with the at least one guide member corresponding thereto. A grinding unit is located in the adjustment member and has a grinding face formed in the inner periphery thereof. A case has a grinding part located therein. The grinding part is located corresponding to the grinding face of the grinding unit. A gap is formed between the grinding part and the grinding face. When the adjustment seat is rotated, the adjustment member is moved axially by movement of the at least one ridge relative to the at least one guide member to adjust the gap.

Preferably, the main part has a skirt formed to the lower portion thereof, and the at least one slot is formed through the skirt. The adjustment seat includes an annular portion which is located corresponding to the top end of the skirt. Multiple teeth are formed to the underside of the annular portion. A resilient member is located between the underside of the annular portion and the top end of the skirt. The resilient member has at least one engaging portion located corresponding to the teeth.

Preferably, the resilient member is a resilient ring which is mounted to the main part and located on the top end of the skirt.

Preferably, the resilient member has multiple support portions formed on the underside thereof. A dent is formed to the underside of the resilient member and located between the adjacent support portions. The at least one engaging portion is located on the top end of the resilient member and located corresponding to the support portion corresponding thereto.

Preferably, the main part has at least one positioning notch defined in the outer periphery thereof. The resilient member has a positioning portion which is formed to the inner periphery of the resilient member and located corresponding to the at least one positioning notch.

Preferably, the at least one guide member is a spiral groove.

Preferably, the adjustment member has an enlarged portion and the at least one brick is formed to outside of the enlarged portion. The enlarged portion has a stepped portion formed to the inside thereof. The grinding unit has a flange which is engaged with the stepped portion.

Preferably, the enlarged portion includes a reception room defined in the inner periphery of the stepped portion. The reception room is located at the lower end of the enlarged portion and securely receives a first ring therein. The gap communicates with a space enclosed by the first ring. The grinding unit is partially positioned on the first ring.

Preferably, the at least one slot has a different shape of cross section from each other, the at least one brick has a different shape of cross section from each other.

Preferably, the adjustment seat has a support member connected to the lower end thereof. The support member is a ring-shaped member and has a lip extending from the inner periphery thereof. The lip is located corresponding to the lower end of the adjustment member and does not block the gap. The lip restricts axial movement of the adjustment member.

Preferably, the case has a space defined therein. A shaft extends through the case and is connected between the grinding part and a knob. The knob is located to the top end of the case.

Preferably, the main part has a bridge which is formed diametrically in the main part. The bridge has a tube, and the shaft rotatably extends through the tube.

Preferably, a rotary member is rotatably connected to the bottom end of the case. The rotary member is fixed to the adjustment seat.

Preferably, the main part has a top portion formed to the top end thereof. A second ring is mounted to the top portion and fixed to the case. The second ring has a tubular portion extending from the bottom end thereof. The rotary member has an annular tongue extending from the inner periphery thereof. The annular tongue is located between the top end of the adjustment seat and the tubular portion to pivotably connect the rotary member to the case.

The advantages of the present invention are that the contact area between the ridges and the guide members reduces because the adjustment member and the distance-located bricks. This allows the users to rotate the adjustment seat easily to move the adjustment member axially, such that the adjustment and grinding processes are smooth.

By the resilient member, when the rotary member is rotated to drive the adjustment seat, the engaging portions resiliently move along the teeth so as to enhance the operational handling. After the desired gap is set, the gap does not unexpectedly changed due to touch of the adjustment seat. In addition, when rotating the knob to operate the spice grinder, the friction between the grinding unit, the grinding part and the particles of the spice cannot overcome the force of the resilient member, and the friction between the resilient member and the teeth so as to cause movement of the adjustment seat to change the gap. Accordingly, the size of the ground particles is consistent.

The present invention will become more obvious from the following description when taken in connection with the accompanying drawings which show, for purposes of illustration only, a preferred embodiment in accordance with the present invention.

### BRIEF DESCRIPTION OF THE DRAWINGS

Fig. 1 is an exploded view of the conventional spice grinder;
Fig. 2 is a perspective view to show the spice grinder of the present invention;
Fig. 3 is an exploded view of the spice grinder of the present invention;
Fig. 4 is a bottom view of the spice grinder of the present invention;
Fig. 5 shows the adjustment member of the spice grinder of the present invention;
Fig. 6 shows that the adjustment member of the spice grinder of the present invention is rotated toward one direction, and the adjustment member is located at a higher position;
Fig. 7 is a cross sectional view to show a portion of the spice grinder of the present invention in the status as disclosed in Fig. 6;
Fig. 8 shows that the adjustment member of the spice grinder of the present invention is rotated toward another direction, and the adjustment member is located at a lower position;
Fig. 9 is a cross sectional view to show a portion of the spice grinder of the present invention in the status as disclosed in Fig. 8;
Fig. 10 illustrates the gaps between the engaging portions and the teeth when the adjustment seat is rotated, and
Fig. 11 illustrates that the engaging portions are urged by the teeth when the adjustment seat is rotated.

### DETAILED DESCRIPTION OF THE PREFERRED EMBODIMENT

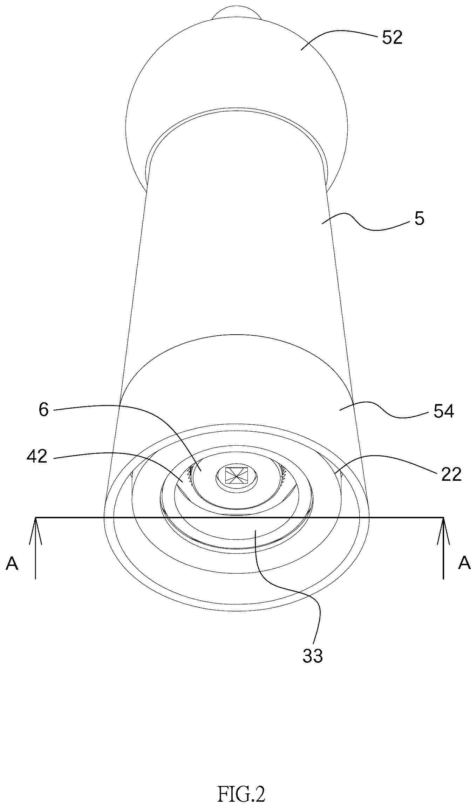

Referring to Figs. 2 to 5, the spice grinder of the present invention comprises a main part 1 having a through hole 11 defined axially therethrough. At least one slot 12 is defined axially through the wall of the lower portion of the main part 1. The at least one slot 12 communicates with the through hole 11.

An adjustment seat 2 is a tubular seat and mounted to outside of the main part 1. The adjustment seat 2 has at least one guide member 21 defined in the inner periphery thereof.

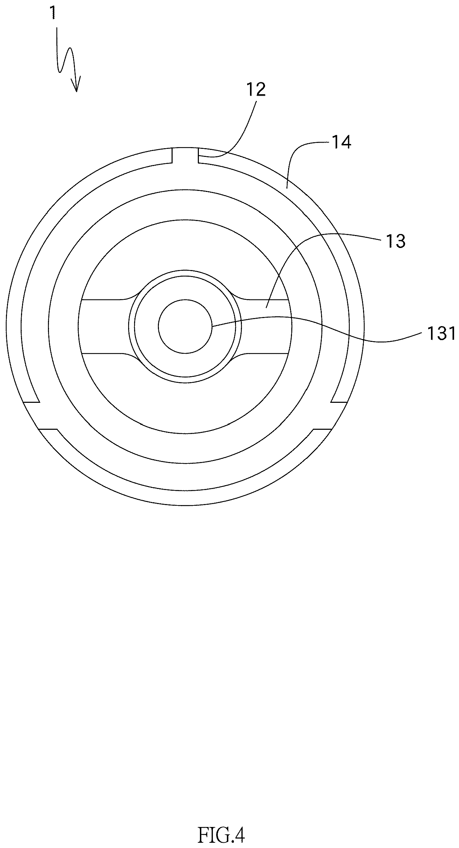

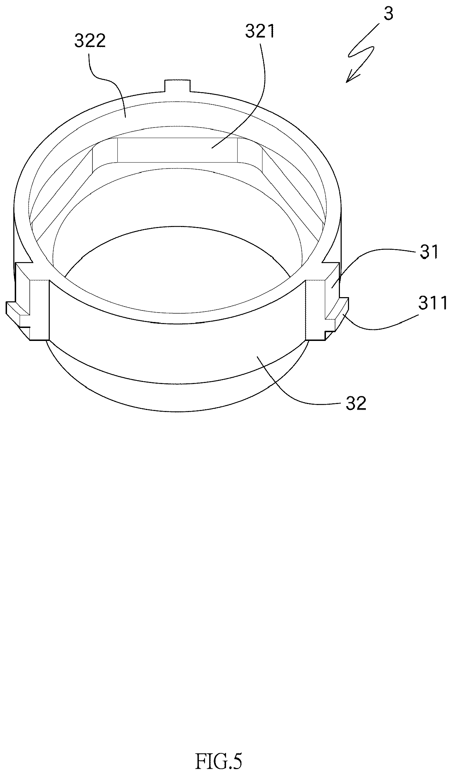

An adjustment member 3 is a tubular member and has at least one brick 31 formed on the outside thereof. For the assembly between the at least one slot 12 and the at least one brick 13, in order to enhance the precision of assembly and the assembly direction of the adjustment member 3 to the main part 1 as shown in Figs. 4 and 5, the at least one slot 12 has a different shape of cross section from each other, and the at least one brick 31 has a different shape of cross section from each other. Therefore, the at least one brick 31 is assembled to the at least one slot 12 correspondingly.

The at least one brick 31 has at least one ridge 311 which is slidably engaged with the at least one guide member 21 corresponding thereto. In one embodiment and not limited thereto, the at least one guide member 21 is a spiral groove, and the at least one ridge 311 is the correspondent threaded section, so that the at least one ridge 311 is spirally and slidably engaged with the at least one guide member 21. In other embodiments, the at least one guide member 21 can be the threaded section, and the at least one ridge 311 can be a spiral groove. A grinding unit is a ring-shaped unit and located in the adjustment member 3. A grinding face 41 is formed in the inner periphery of the grinding unit 4.

A case 5 has a grinding part 6 located therein. The grinding part 6 is located corresponding to the grinding face 41 of the grinding unit 4. A gap "D" is formed between the grinding part 6 and the grinding face 41.

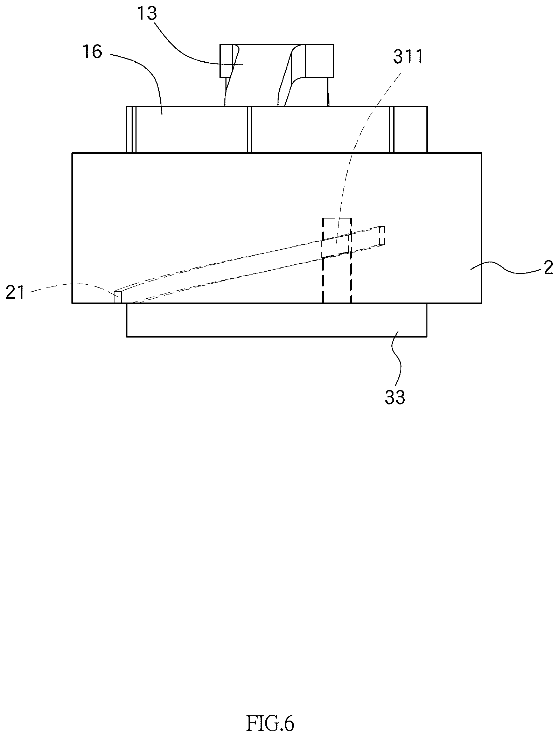

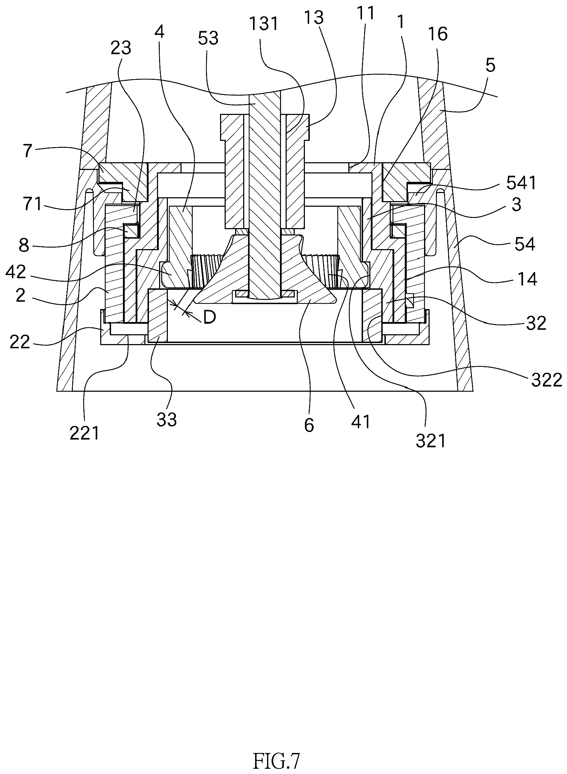

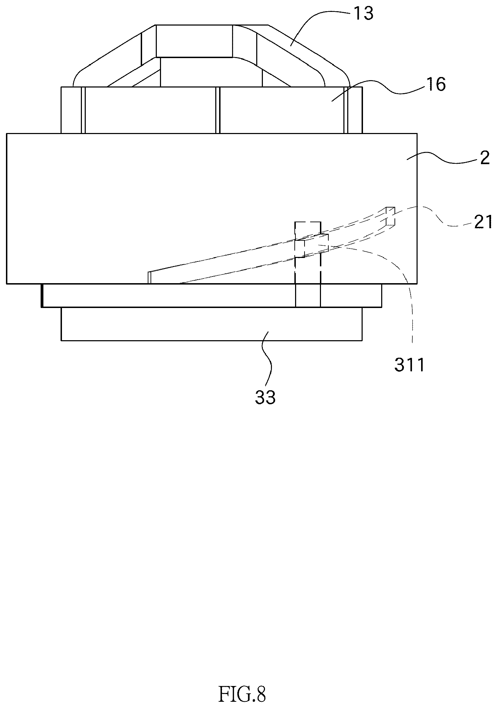

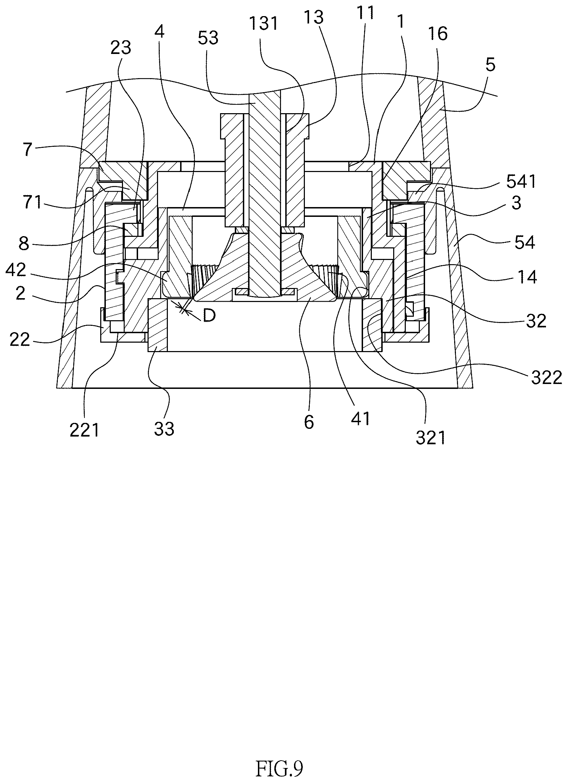

When the adjustment seat 2 is rotated, the adjustment member 3 is moved axially by movement of the at least one ridge 311 relative to the at least one guide member 21 so as to adjust the gap "D". As shown in Fig. 6, when the adjustment seat 2 is rotated toward one direction, the at least one ridge 311 of the adjustment member 3 moves toward the locked direction due to the threaded engagement between the at least one ridge 311 and the at least one guide member 21. The adjustment member 3 therefore moves toward the top end of the case 5. Because the position of the grinding pat 6 is not changed, so that the upward movement of the adjustment 3 will widen the gap "D". As shown in Fig. 7, when the spice such as peppers are to be ground, the peppers are put into the body 5 and drop to the adjustment member 3 via the through hole 11, and the peppers are located between the grinding part 6 and the grinding unit 4. If the size of the peppers are smaller or equal to the gap "D", these peppers are ground. As described above, the larger gap "D" is adjusted, the larger size of the ground peppers will be obtained. On the contrary, as shown in Figs. 8 and 9, when the adjustment seat 2 is rotated toward the other direction, the at least one ridge 311 of the adjustment member 3 moves toward the loosened direction due to the threaded engagement between the at least one ridge 311 and the at least one guide member 21. The adjustment member 3 therefore moves toward the lower end of the case 5, and the gap "D" becomes smaller. Therefore, the size of the peppers will be smaller. In order to prevent the at least one ridge 311 from separating from the at least one guide member 21 due to overly loosened, in one embodiment, the adjustment seat 2 has a support member 22 connected to the lower end thereof. The support member 22 is a ring-shaped member and has a lip 221 extending from the inner periphery thereof. The lip 221 restricts axial movement of the adjustment member 3. As shown in Fig. 9, the lower end of the adjustment member 3 is rested on the lip 221 so that the adjustment seat 2 cannot be rotated along the loosened direction and ensures that the spice grinder to be operated efficiently. In order to avoid the lip 221 from affecting the ground spice dropping from the spice grinder, The lip 221 is located corresponding to the lower end of the adjustment member 3 and does not block the gap "D". Therefore, the lip 221 may have holes or the lip 221 is an annular lip.

In one embodiment, for the case 5, the case 5 has a space 51 defined therein which communicates with the through hole 11 so as to receive the spice to be ground. A shaft 53 extends through the case 5 and is connected between the grinding part 6 and a knob 52, wherein the knob 52 is located to the top end of the case 5. Therefore, the position of the grinding part 6 is fixed. When rotating the knob 52, the grinding part 6 is rotated by rotation of the shaft 53, and the spice is ground between the grinding part 6 and the grinding face 41 of the grinding unit 4.

In order to ensure that the shaft 53 does not move, the main part 1 has a bridge 13 which is formed diametrically in the main part 1. The bridge 13 has a tube 131, and the shaft 53 rotatably extends through the tube 131. It is noted that the bridge 13 only blocks a portion of the through hole 11, and the spice can drop into the grinding unit 4 via the space 51 of the case 5.

In one embodiment, a rotary member 54 is rotatably connected to the bottom end of the case 5, and the rotary member 54 is fixed to the adjustment seat 2. For example, the main part 1 has a top portion 16 formed to the top end thereof. A second ring 7 is mounted to the top portion 16 and fixed to the case 5. The second ring 7 has a tubular portion 71 extending from the bottom end thereof. The diameter of the tubular portion 71 is smaller than that of the second ring 7. The rotary member 54 has an annular tongue 541 extending from the inner periphery thereof. The annular tongue 541 is located between the top end of the adjustment seat 2 and the tubular portion 71 to pivotably connect the rotary member 54 to the case 5, and the rotation of the rotary member 54 drives the adjustment seat 2.

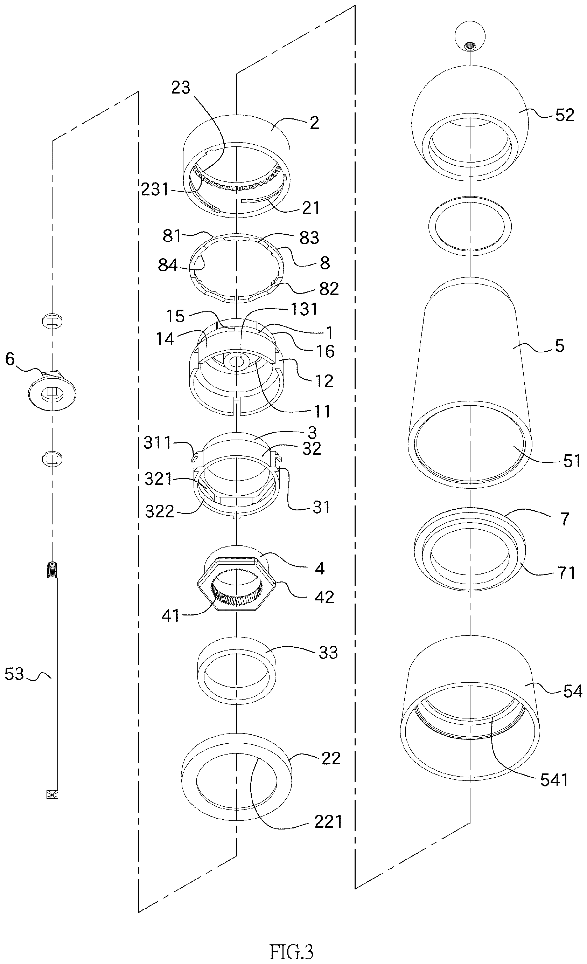

As shown in Figs. 3 and 5, the adjustment member 3 has an enlarged portion 32 and the at least one brick 31 is formed to outside of the enlarged portion 32. The enlarged portion 32 has a stepped portion 321 formed to the inside thereof. The grinding unit 4 has a flange 42 which is engaged with the stepped portion 321 to position the grinding unit 4 to the adjustment member 3. In another embodiment, the enlarged portion 32 includes a reception room 322 defined in the inner periphery of the stepped portion 321. The reception room 322 is located at the lower end of the enlarged portion 32 and securely receives a first ring 33 therein. The gap "D" communicates with a space enclosed by the first ring 33. The grinding unit 4 is partially positioned on the first ring 33.

In one embodiment, the main part 1 has a skirt 14 formed to the lower portion thereof. The at least one slot 12 is formed through the skirt 14. The adjustment seat 2 includes an annular portion 23 which is located corresponding to the top end of the skirt 14. Multiple teeth 231 are formed to the underside of the annular portion 23. A resilient member 8 is located between the underside of the annular portion 23 and the top end of the skirt 14. The resilient member 8 has at least one engaging portion 81 located corresponding to the teeth 231. By the resilient contact between the at least one engaging portion 81 and the teeth 231, when rotating the adjustment seat 2, the teeth 231 repeatedly press the at least one engaging portion 81 so that the user is acknowledged the rotation of the adjustment seat 2. The friction between the teeth 231 and the at least one engaging portion 81 also prevents the adjustment seat 2 from being driven.

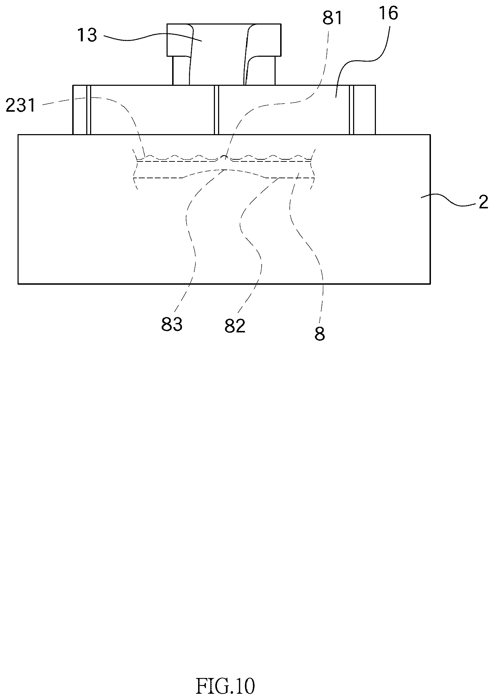

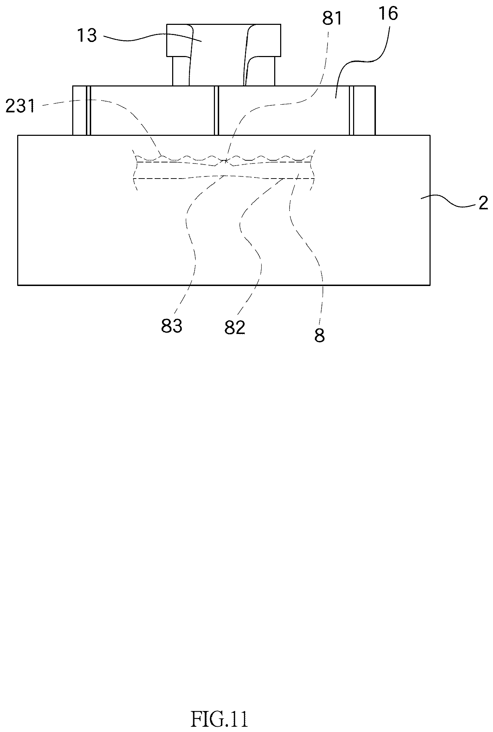

In one embodiment, the resilient member 8 is a resilient ring which is mounted to the main part 1 and located on the top end of the skirt 14. Specifically, the resilient member 8 has multiple support portions 82 formed on the underside thereof. A dent 83 is formed to the underside of the resilient member 8 and located between the adjacent support portions 82. The at least one engaging portion 81 is located on the top end of the resilient member 8 and located corresponding to the support portion 82 corresponding thereto. As shown in Fig. 10, when the at least one engaging portion 81 is located between the teeth 231, the at least one engaging portion 81 is not pressed. When the adjustment seat 2 is rotated, and the tips of the teeth 231 gradually move close to the at least one engaging portion 81, or contact the at least one engaging portion 81, as shown in Fig. 11, the at least one engaging portion 81 will resiliently reduce the dent 83 so that the tips of the teeth 231 are able to pass beyond the top end of the at least one engaging portion 81. When the adjustment seat 2 is continuously rotated, and the at least one engaging portion 81 is located between the teeth 231 again, as shown in Fig. 10, the at least one engaging portion 81 resiliently bounces back to its initial position. By repeatedly doing so, the handling feel is transferred to the user's hand. Besides, this specific arrangement also prevents the friction between the grinding unit 4 and the grinding part 6 from driving the adjustment seat 2 via the adjustment member 3 to change the gap "D".

In another embodiment, for setting the rotational direction of the resilient member 8, the main part 1 has at least one positioning notch 15 defined in the outer periphery thereof. The resilient member 8 has a positioning portion 84 which is formed to the inner periphery of the resilient member 8 and located corresponding to the at least one positioning notch 15. When the adjustment seat 2 is rotated, the resilient member 8 does not rotate freely.

While we have shown and described the embodiment in accordance with the present invention, it should be clear to those skilled in the art that further embodiments may be made without departing from the scope of the present invention.

## Claims

1. A spice grinder comprising:
a main part having a through hole defined axially therethrough, at least one slot defined axially through a wall of a lower portion of the main part, the at least one slot communicating with the through hole;
an adjustment seat being a tubular seat and mounted to outside of the main part, the adjustment seat having at least one guide member defined in an inner periphery thereof;
an adjustment member being a tubular member and having at least one protrusion formed on an outside thereof, the at least one protrusion located corresponding to the at least one slot, the at least one protrusion having at least one ridge which is slidably engaged with the at least one guide member corresponding thereto, a grinding unit being a ring-shaped unit and located in the adjustment member, a grinding face formed in an inner periphery of the grinding unit, and
a case has a grinding part located therein, the grinding part located corresponding to the grinding face of the grinding unit, a gap formed between the grinding part and the grinding face, when the adjustment seat is rotated, the adjustment member is moved axially by movement of the at least one ridge relative to the at least one guide member so as to adjust the gap.

2. The spice grinder as claimed in claim 1, wherein the main part has a skirt formed to the lower portion thereof, the at least one slot is formed through the skirt, the adjustment seat includes an annular portion which is located corresponding to a top end of the skirt, multiple teeth are formed to an underside of the annular portion, a resilient member located between the underside of the annular portion and the top end of the skirt, the resilient member has at least one engaging portion located corresponding to the teeth.

3. The spice grinder as claimed in claim 2, wherein the resilient member is a resilient ring which is mounted to the main part and located on the top end of the skirt.

4. The spice grinder as claimed in claim 3, wherein the resilient member has multiple support portions formed on an underside thereof, a dent is formed to the underside of the resilient member and located between the adjacent support portions, the at least one engaging portion is located on a top end of the resilient member and located corresponding to the support portion corresponding thereto.

5. The spice grinder as claimed in claim 3, wherein the main part has at least one positioning notch defined in an outer periphery thereof, the resilient member has a positioning portion which is formed to an inner periphery of the resilient member and located corresponding to the at least one positioning notch.

6. The spice grinder as claimed in claim 1, wherein the at least one guide member is a spiral groove.

7. The spice grinder as claimed in claim 1, wherein the adjustment member has an enlarged portion and the at least one protrusion is formed to outside of the enlarged portion, the enlarged portion has a stepped portion formed to an inside thereof, the grinding unit has a flange which is engaged with the stepped portion.

8. The spice grinder as claimed in claim 7, wherein the enlarged portion includes a reception room defined in an inner periphery of the stepped portion, the reception room is located at a lower end of the enlarged portion and securely receives a first ring therein, the gap communicates with a space enclosed by the first ring, the grinding unit is partially positioned on the first ring.

9. The spice grinder as claimed in claim 1, wherein the at least one slot has a different shape of cross section from each other, the at least one protrusion has a different shape of cross section from each other.

10. The spice grinder as claimed in claim 1, wherein the adjustment seat has a support member connected to a lower end thereof, the support member is a ring-shaped member and has a lip extending from an inner periphery thereof, the lip is located corresponding to the lower end of the adjustment member and does not block the gap, the lip restricts axial movement of the adjustment member.

11. The spice grinder as claimed in claim 1, wherein the case has a space defined therein, a shaft extends through the case and is connected between the grinding part and a knob, the knob is located to a top end of the case.

12. The spice grinder as claimed in claim 11, wherein the main part has a bridge which is formed diametrically in the main part, the bridge has a tube, the shaft rotatably extends through the tube.

13. The spice grinder as claimed in claim 11, wherein a rotary member is rotatably connected to a bottom end of the case, the rotary member is fixed to the adjustment seat.

14. The spice grinder as claimed in claim 13, wherein the main part has a top portion formed to a top end thereof, a second ring is mounted to the top portion and fixed to the case, the second ring has a tubular portion extending from a bottom end thereof, the rotary member has an annular tongue extending from an inner periphery thereof, the annular tongue is located between the top end of the adjustment seat and the tubular portion to pivotably connect the rotary member to the case.
